# EUROPEAN PATENT SPECIFICATION

(11) **EP 1 637 982 B1**
(45) Date of publication and mention of the grant of the patent: **03.11.2010**
(21) Application number: 05020366.0
(22) Date of filing: 19.09.2005
(51) Int. Cl.: G06F 3/033

(54) **Adjustable display of mobile communications terminal**
Justierbare Anzeige der beweglichen Datenstation
Affichage réglable de terminal de réseau mobile

(30) Priority: 20.09.2004 KR 2004075216
(43) Date of publication of application: 22.03.2006
(73) Proprietor: LG Electronics Inc., Seoul 150-721 (KR)
(72) Inventor: Lee, Joo-Hyun, Gwangjin-Gu Seoul (KR)
(74) Representative: Beyer, Andreas

(56) References cited:
- US-A1- 2003 137 470
- US-B1- 6 192 341

## Description

### FIELD OF THE INVENTION

The present invention relates to a mobile communications terminal, and more particularly, to adjusting a display of a mobile communications terminal capable of improving user convenience.

### BACKGROUND OF THE INVENTION

In general, a mobile communications terminal is a communication device capable of performing a wireless call with another party. The mobile communications terminal also provides a wireless connection at any time and any place by utilizing a switching control of a Mobile Switching Center (MSC) while moving in a service region formed by a Base Station (BS). Accordingly, data communications using symbols, numbers, characters, or the like, and multimedia communications including images and videos, as well as voice communications, can be performed.

Recently, the mobile communications terminal has been provided with various functions in addition to a phone conversation function. These functions include camera functions, MPEG Audio Layer 3 (MP3) player functions, Internet access, Short Message Service functions, and the like. Consequently, the shape and User Interface (UI) of the mobile communications terminal have been designed according to the provided additional functions.

For instance, in general, although not colorful, a text type menu system of the mobile communications terminal is constructed not to be monotonous like the text type, by providing icons and simple animated movement. In particular, the mobile communications terminal may be allowed to output a background screen even in an idle mode, so as to be more colorful.

Therefore, a graphic interface of the mobile communications terminal focuses on an optical splendor to attract users' attention. However, it does not consider senior citizens or other users who have bad eyesight. Thus, it would be preferable to include a technique capable of varying font sizes for users having bad eyesight.

Accordingly, in the mobile communications terminal according to the related art, the users can directly set the font size by adjusting a menu. However, the font sizes that can be set are simply limited to large or small fonts. As a result, it is difficult to appropriately adjust the letter size according to the user's eyesight.

US 6,192,341 B1 relates to a data processing system and method for customizing a user output of a data processing system, wherein a user preference for an audio or visual user output of a data processing system is determined. In response to determination of a user output having a first audio or visual frequency, the user output is mapped to a second audio or visual frequency in accordance with the user preference to obtain a customized user output. Thereafter, the customized user output is presented by the data processing system.

US 2003/0137470 A1 refers to a method, system and program for selectively applying translucent filters to graphical images according to visual disability needs. A selection of a filter for a particular user is received. The filter is applied to at least a portion of an original image. The original image is then graphically displayed overlayed by the filter within a user interface, such that the original image is adjusted to specifically accommodate for a visual disability of the particular user.

### SUMMARY OF THE INVENTION

The present invention is directed to adjusting a display of a mobile communications terminal.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in an apparatus for adjusting a display of a mobile communications terminal, the apparatus comprising a voice recognition unit for detecting a user's voice data, wherein the user's voice data corresponds to image data displayed on the display, a controller for determining a user's eyesight level based on the detected user's voice data and preset reference data, and for adjusting the display based on the determined eyesight level, and a memory unit for storing the preset reference data.
Preferably, the preset reference data comprises at least one of eyesight values, font size values corresponding to the eyesight values, image data preset according to the font size values, and audio data corresponding to the image data. Also, at least more than one preset image data exists for each eyesight value.

Preferably, the controller determines the user's eyesight level by comparing the user's detected voice data with preset audio data corresponding to the displayed image data. The image data is displayed in a state where a preset distance between the mobile communications terminal and the user is maintained, wherein the preset distance is 30 cm.

Furthermore, the controller allows the user to read the displayed image data within a preset time, wherein the preset time is 3 seconds.

In accordance with another embodiment of the present invention, a method for adjusting a display of a mobile communications terminal comprises detecting a user's voice data, wherein the user's voice data corresponds to image data displayed on the display, determining a user's eyesight level based on the detected user's voice data and preset reference data, and adjusting the display based on the determined eyesight level.

Preferably, the preset reference data comprises at least one of eyesight values, font size values corresponding to the eyesight values, image data preset according to the font size values, and audio data corresponding to the image data. Also, at least more than one preset image data exists for each eyesight value.

In one aspect of the invention, the step of determining the user's eyesight level comprises displaying image data corresponding to a preset eyesight value according to the user's request to adjust the display, detecting the user's voice data for the displayed image data, comparing the user's detected voice data with preset audio data, determining the number of times the user's detected voice data is identical to the preset audio data, and determining an eyesight value corresponding to the user's detected voice data when the determined number of times the user's detected voice data is identical to the preset audio data is the same as a predetermined number.

Preferably, the method further comprises displaying image data corresponding to an eyesight value decreased by a certain value when the user's detected voice data is not identical to the preset audio data.

The predetermined number is at least more than one time. Preferably, the method further comprises displaying another image data corresponding to the same eyesight value when the determined number of times the user's detected voice data is identical to the preset audio data is not the same as the predetermined number.

Preferably, the step of adjusting the display comprises confirming whether to automatically adjust the display according to the determined eyesight level, and adjusting the corresponding display if the display is confirmed to be automatically adjusted. Alternatively, the method further comprises allowing the user to manually adjust the display if it is confirmed not to automatically adjust the display.

In another aspect of the invention, the image data is displayed in a state where a preset distance between the mobile communications terminal and the user is maintained, wherein the preset distance is 30 cm.

In a further aspect of the invention the method further comprises allowing the user to read the displayed image data within a preset time, wherein the preset time is 3 seconds.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.
Fig. 1 is a block diagram illustrating an apparatus for adjusting a display of a mobile communications terminal in accordance with one embodiment of the present invention.
Fig. 2 is a flowchart illustrating a method for adjusting a display of a mobile communications terminal in accordance with one embodiment of the present invention.
Fig. 3 is a flowchart illustrating a method for examining a user's eyesight of Fig. 2.

### DETAILED DESCRIPTION OF THE PREFERRED EMBODIMENTS

The present invention relates to adjusting a display of a mobile communications terminal capable of improving user convenience.

Reference will now be made in detail to the preferred embodiments of the present invention, examples of which are illustrated in the accompanying drawings.

Hereinafter, with reference to the attached drawings, explanation will now be made for some preferred embodiments of an apparatus and method for adjusting a display of a mobile communications terminal according to the present invention. The present invention is capable of improving user convenience by measuring a user's eyesight and adjusting the display according to the measured eyesight.

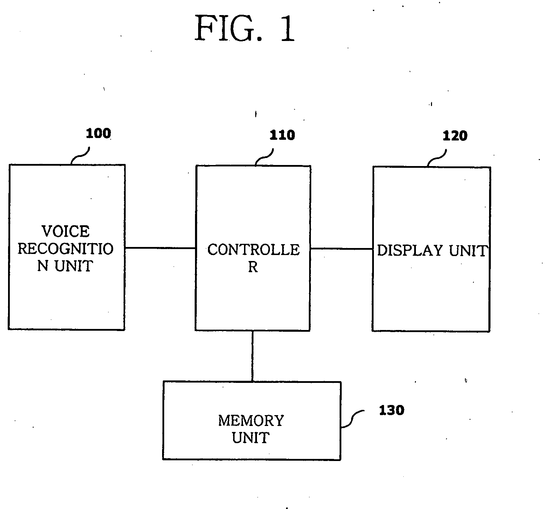

Fig. 1 is a block diagram illustrating a construction of an apparatus for adjusting a font (letter) size of a mobile communications terminal in accordance with one embodiment of the present invention.

Referring to Fig. 1, an apparatus for adjusting a font (letter) size of a mobile communications terminal in accordance with one embodiment of the present invention comprises a voice recognition unit 100 for detecting a user's audio (voice) data for image data displayed according to a user's request for adjusting a font size. The apparatus further comprises a controller 110 for determining a user's eyesight on the basis of the detected audio data and a preset reference table. The controller 110 outputs a control signal to adjust a font size according to the determined eyesight. A display unit 120 displays the image data for which the font size has been adjusted on the basis of the outputted control signal. A memory unit 130 stores the preset reference table for measuring the user's eyesight.

Preferably, the preset reference table comprises eyesight values, font size values corresponding to the eyesight values, image data preset according to the font size values, and audio data corresponding to the image data.

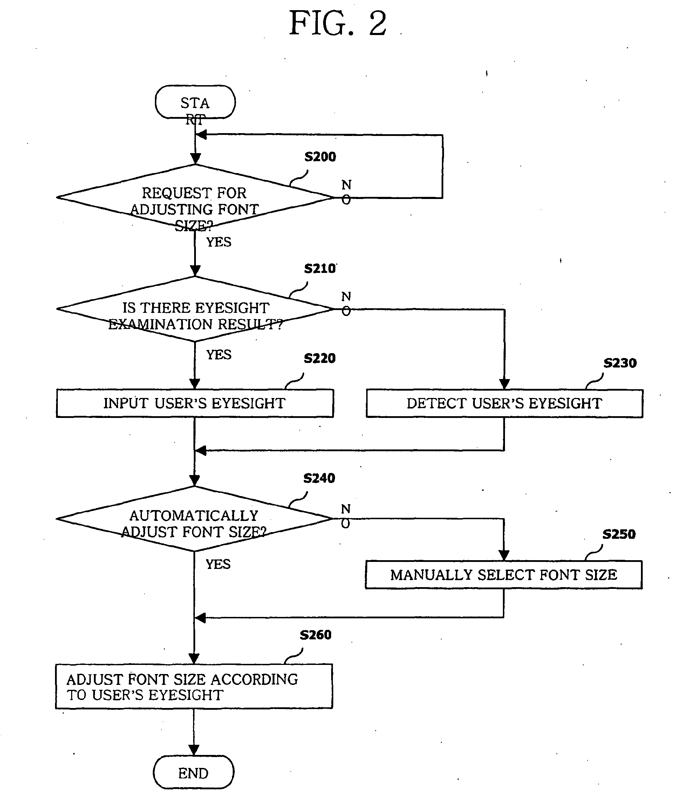

A method for adjusting a font size of a mobile communications terminal in accordance with one embodiment of the present invention having such construction will now be explained with reference to Fig. 2.

As shown in Fig. 2, a method for adjusting a font (letter) size of a mobile communications terminal according to the present invention comprises determining whether a user requests to adjust a font size (S200) and confirming whether there is resultant data for the user's eyesight having been detected when it is determined that the user has requested to adjust the font size (S210). If there is no resultant data for the user's eyesight having been detected, the user's eyesight is then detected (S230). After, it is determined whether to automatically adjust the font size according to the detected eyesight (S240). If so determined, the font size automatically adjusted according to the user's eyesight (S260).

Notably, if resultant data exists for the user's eyesight having been detected, the mobile communications terminal performs a step of inputting the user's eyesight (S220). Also, if it is determined that the font size should not be automatically adjusted, a step of manually selecting the font size may be performed (S250).

Such method for adjusting the font size of the mobile communications terminal in accordance with one embodiment of the present invention will now be explained in more detail.

First, in a manufacturing process of the mobile communications terminal, image data preset according to eyesight, audio (voice) data corresponding to the image data, and font size values are stored in the memory unit 130 such that a manufacturer can measure a user's eyesight. Preferably, the preset image data comprises data indicating characters, numbers, symbols, and the like, and at least more than one image data is set for the same eyesight.

In a typical eyesight examination, the user's eyesight is measured at a point of two meters away from an eyesight examination board. However, in the eyesight examination according to the present invention, a preferable distance between the mobile communications terminal and the user is preset in the manufacturing process of the mobile communications terminal. The preferable distance is preset by considering the characteristics of a display device of the mobile communications terminal.

In addition, in the eyesight examination according to the present invention, after the preset image data is displayed in a state where the preset distance between the mobile communications terminal and the user is maintained, the mobile communications terminal is preset such that the user is allowed to read the displayed image data within a preset time. Preferably, the preset time begins when an initiation sound is generated. Thereafter, the preset distance and time are stored in the memory unit 130. Preferably, the preset distance is set to 30 cm, and the preset time is set to 3 seconds. However, other settings may be used.

When the user requests to adjust the font size, namely, selects a menu on the mobile communications terminal to adjust the font size (S200), the controller 110 may display suggestions stored in the memory unit 130. The suggestions may include the preset distance, the preset time, and the like.

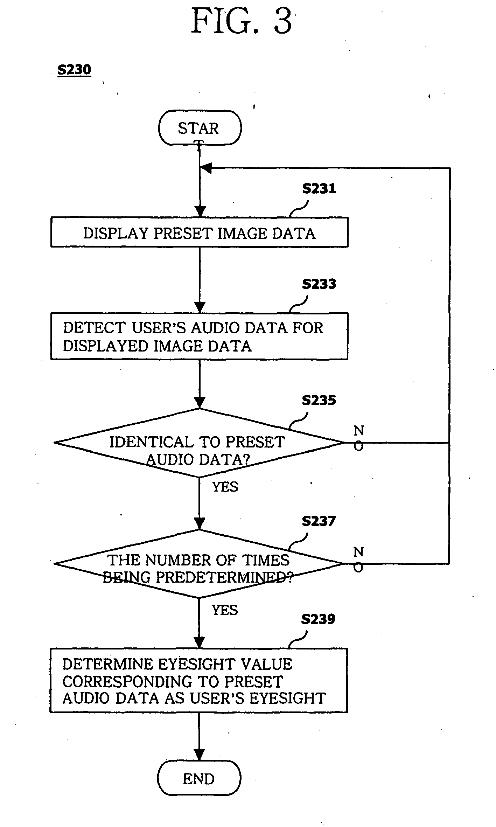

Afterwards, the controller 110 confirms with the user whether the user already knows of his/her eyesight (S210). That is, when it is confirmed that the user already knows his eyesight examination information, the controller 110 receives the eyesight examination values that the user has inputted using an input device (S220). Otherwise, the user's eyesight is detected when the user does not actually know his eyesight information. Hereinafter, a method for detecting the user's eyesight when the user does not know his eyesight will be explained with reference to Fig. 3.

Fig. 3 is a flowchart illustrating a method for detecting the user's eyesight of Fig. 2. As shown in Fig. 3, a method for detecting the user's eyesight according to the present invention comprises displaying image data corresponding to a preset eyesight value when there are no eyesight examination results (S231), detecting a user's audio (voice) data for displayed image data (S233), and comparing the user's detected audio data and preset audio data (S235).

When the user's detected audio data is identical to the preset audio data, the number of times the detected audio data is identical to the preset audio data corresponding to at least one or more image data related to the same eyesight level is compared to a predetermined number (S237). When the number of times being identical is the same as the predetermined number, an eyesight value corresponding to the detected audio data is determined as the user's eyesight (S239).

Such method for detecting the user's eyesight in accordance with one embodiment of the present invention will now be explained in more detail.

First, when the user does not know his eyesight, the controller 110 displays image data, which is stored in the memory unit 130 and used to examine the user's eyesight (S231). Preferably, the controller 110 displays the image data stored in the memory unit 130 from image data corresponding to preset eyesight values in sequential order. The image data may be displayed one by one beginning with a high eyesight value or a low eyesight value.

When the controller 110 displays the image data, the user reads the image data displayed on the display unit 120 within a preset time, and the voice recognition unit 100 detects the user's audio (voice) data (S233). When the voice recognition unit 100 does not detect the user's audio data within the preset time, or the detected audio data is not identical to the preset audio data corresponding to the image data, the controller 110 determines that the user can not visually recognize the image data. Accordingly, the controller 110 displays another image data corresponding to an eyesight level that is lower than the eyesight level corresponding to the previously displayed image data.

Conversely, the controller 110 compares the detected audio data with the preset audio data corresponding to the image data (S235). That is, when the detected audio data is identical to the preset audio data corresponding to the image data, the controller 110 displays another image data corresponding to the same eyesight level as the displayed image data. Namely, the controller 110 confirms for a predetermined number of times as to whether the preset audio data corresponding to at least one or more image data related to the same eyesight level is identical to the audio data measured from the user (S237).

The controller 110 determines the user's eyesight based on the result from comparing the user's detected audio data with the preset audio data that is stored in the memory unit 130 and corresponds to the image data. That is, when the user's detected audio data is identical to the preset audio data of at least one or more image data corresponding to the same eyesight, the controller 110 determines the eyesight value corresponding to the preset audio data as being the user's eyesight (S239).

Preferably, the controller 110 stores the preset audio data corresponding to the displayed image data in an inner buffer (not shown) within the controller 110. Accordingly, the audio data stored in the inner buffer may be compared with the user's detected audio data.

As a result, the controller 110 confirms to the user based on the measured eyesight whether to automatically adjust the font size (S240), and adjusts the font size according to the user confirmation result (S260). That is, the controller 110 may display image data having a preset font size according to the measured eyesight when automatically changing the font size. However, a user may change the preset font size according to the measured eyesight by manually changing the font size (S250). The controller 110 then displays the image data having the changed font size on the display unit 120.

Alternatively, when the user already knows of his/her eyesight, the font size can manually be changed into a font size suitable for his/her eyesight without performing the eyesight examination. Such process may be included by providing a separate menu for inputting an eyesight level. Moreover, the user may be allowed to directly input his/her eyesight during the eyesight examination, so as to automatically change the font size without performing the eyesight examination.

As aforementioned, in the apparatus and method for adjusting the font size of the mobile communications terminal according to the present invention, the user's eyesight is measured and the font size is adjusted according to the user's measured eyesight, so as to improve user convenience.

## Claims

1. An apparatus for adjusting a display of a mobile communications terminal, the apparatus comprising:
a voice recognition unit (100) for detecting a user's voice data, wherein the user's voice data corresponds to image data displayed on the display;
a controller (110) for determining a user's eyesight level by comparing the user's detected voice data with preset reference data corresponding to the displayed image data, and for adjusting the display based on the determined eyesight level; and
a memory unit (130) for storing the preset reference data,
wherein the controller (110) displays image data corresponding to an eyesight value decreased by a certain value when the user's detected voice data is not identical to the preset reference data.

2. The apparatus of claim 1,
wherein the preset reference data comprises at least one of:
eyesight values;
font size values corresponding to the eyesight values;
image data preset according to the font size values; and
audio data corresponding to the image data.

3. The apparatus of claim 2,
wherein at least more than one preset image data exists for each eyesight value.

4. The apparatus of claim 1,
wherein the image data is displayed in a state where a preset distance between the mobile communications terminal and the user is maintained.

5. The apparatus of claim 4,
wherein the preset distance is 30 cm.

6. The apparatus of claim 1,
wherein the controller (110) allows the user to read the displayed image data within a preset time.

7. The apparatus of claim 6,
wherein the preset time is 3 seconds.

8. A method for adjusting a display of a mobile communications terminal, the method comprising:
detecting (S233) a user's voice data, wherein the user's voice data corresponds to image data displayed on the display;
determining a user's eyesight level by comparing user's detected voice data with preset reference data corresponding to the displayed image data; and
adjusting (S260) the display based on the determined eyesight level,
wherein image data corresponding to an eyesight value decreased by a certain value is displayed when the user's detected voice data is not identical to present reference data.

9. The method of claim 8,
wherein the preset reference data comprises at least one of:
eyesight values;
font size values corresponding to the eyesight values;
image data preset according to the font size values;
and audio data corresponding to the image data.

10. The method of claim 9,
wherein at least more than one preset image data exists for each eyesight value.

11. The method of claim 8,
wherein the step of determining the user's eyesight level comprises:
displaying (S231) image data corresponding to a preset eyesight value according to the user's request to adjust the display;
detecting (233) the user's voice data for the displayed image data;
comparing (S235) the user's detected voice data with preset audio data;
determining (237) the number of times the user's detected voice data is identical to the preset audio data; and
determining (S239) an eyesight value corresponding to the user's detected voice data when the determined number of times the user's detected voice data is identical to the preset audio data is the same as a predetermined number.

12. The method of claim 11,
wherein the predetermined number is at least more than one time.

13. The method of claim 11,
further comprising displaying another image data corresponding to the same eyesight value when the determined number of times the user's detected voice data is identical to the preset audio data is not the same as the predetermined number.

14. The method of claim 8,
wherein the step of adjusting (S260) the display comprises:
confirming whether to automatically adjust the display according to the determined eyesight level; and
adjusting the corresponding display if the display is confirmed to be automatically adjusted.

15. The method of claim 14,
further comprising allowing the user to manually adjust the display if it is confirmed not to automatically adjust the display.

16. The method of claim 11,
wherein the image data is displayed in a state where a preset distance between the mobile communications terminal and the user is maintained.

17. The method of claim 16,
wherein the preset distance is 30 cm.

18. The method of claim 11,
further comprising allowing the user to read the displayed image data within a preset time.

19. The method of claim 18,
wherein the preset time is 3 seconds.

## Patentansprüche

1. Vorrichtung zum Anpassen eines Displays eines mobilen Kommunikationsendgeräts, wobei die Vorrichtung umfasst:
eine Spracherkennungseinheit (100) zum Erfassen von Benutzersprachdaten, wobei die Benutzersprachdaten auf dem Display angezeigten Bilddaten entsprechen;
eine Steuerung (110) zum Ermitteln eines Benutzersehkraftpegels durch Vergleichen der erfassten Benutzersprachdaten mit vorgegebenen Referenzdaten entsprechend den angezeigten Bilddaten, und zum Anpassen des Displays basierend auf dem ermittelten Sehkraftpegel; und
eine Speichereinheit (130) zum Speichern der vorgegebenen Referenzdaten, wobei die Steuerung (110) Bilddaten entsprechend einem um einen bestimmten Wert verringerten Sehkraftwert anzeigt, wenn die erfassten Benutzersprachdaten nicht mit den vorgegebenen Referenzdaten übereinstimmen.

2. Vorrichtung nach Anspruch 1,
bei der die vorgegebenen Referenzdaten zumindest eines der Folgenden umfassen:
Sehkraftwerte;
Zeichensatzgrößenwerte entsprechend den Sehkraftwerten;
entsprechend den Zeichensatzgrößenwerten vorgegebene Bilddaten; und
Audiodaten entsprechend den Bilddaten.

3. Vorrichtung nach Anspruch 2,
bei der zumindest mehr als ein vorgegebener Bilddatensatz für jeden Sehkraftwert existiert.

4. Vorrichtung nach Anspruch 1,
bei der die Bilddaten in einem Zustand angezeigt werden, in dem ein vorgegebener Abstand zwischen dem mobilen Kommunikationsendgerät und dem Benutzer beibehalten wird.

5. Vorrichtung nach Anspruch 4,
bei der der vorgegebene Abstand 30 cm ist.

6. Vorrichtung nach Anspruch 1,
bei der die Steuerung (110) es dem Benutzer ermöglicht, die angezeigten Bilddaten innerhalb einer vorgegebenen Zeit zu lesen.

7. Vorrichtung nach Anspruch 6,
bei der die vorgegebene Zeit 3 Sekunden ist.

8. Verfahren zum Anpassen eines Displays eines mobilen Kommunikationsendgeräts, wobei das Verfahren umfasst:
Erfassen (S233) von Benutzersprachdaten, wobei die Benutzersprachdaten auf dem Display angezeigten Bilddaten entsprechen;
Ermitteln eines Benutzersehkraftpegels durch Vergleichen der erfassten Benutzersprachdaten mit vorgegebenen Referenzdaten entsprechend den angezeigten Bilddaten; und
Anpassen (S260) des Displays basierend auf dem bestimmten Sehkraftpegel, wobei Bilddaten entsprechend einem um einen bestimmten Wert verringerten Sehkraftwert angezeigt werden, wenn die erfassten Benutzersprachdaten nicht mit derzeitigen Referenzdaten übereinstimmen.

9. Verfahren nach Anspruch 8,
bei dem die vorgegebenen Referenzdaten zumindest eines der Folgenden umfassen:
Sehkraftwerte;
Zeichensatzgrößenwerte entsprechend den Sehkraftwerten;
entsprechend den Zeichensatzgrößenwerten vorgegebene Bilddaten; und
Audiodaten entsprechend den Bilddaten.

10. Verfahren nach Anspruch 9,
bei dem zumindest mehr als ein vorgegebener Bilddatensatz für jeden Sehkraftwert existiert.

11. Verfahren nach Anspruch 8,
wobei der Schritt des Bestimmens des Benutzersehkraftpegels umfasst:
Anzeigen (S231) von Bilddaten entsprechend einem vorgegebenen Sehkraftwert in Übereinstimmung mit der Benutzeranfrage, das Display anzupassen;
Erfassen (S233) der Benutzersprachdaten für die angezeigten Bilddaten;
Vergleichen (S235) der erfassten Benutzersprachdaten mit vorgegebenen Audiodaten;
Ermitteln (S237) der Häufigkeit, dass die erfassten Benutzersprachdaten mit den vorgegebenen Audiodaten übereinstimmen; und
Ermitteln (S239) eines Sehkraftwerts entsprechend den erfassten Benutzersprachdaten, wenn die bestimmte Häufigkeit, dass die erfassten Benutzersprachdaten mit den vorgegebenen Audiodaten übereinstimmen, gleich groß ist wie eine vorbestimmte Anzahl.

12. Verfahren nach Anspruch 11,
bei dem die vorbestimmte Anzahl zumindest mehr als einmal ist.

13. Verfahren nach Anspruch 11,
weiter umfassend Anzeigen anderer Bilddaten entsprechend dem gleichen Sehkraftwert, wenn die vorbestimmte Häufigkeit, dass die erfassten Benutzersprachdaten mit den vorgegebenen Audiodaten übereinstimmen, nicht gleich der vorbestimmten Anzahl ist.

14. Verfahren nach Anspruch 8,
bei dem der Schritt des Anpassens (S260) des Displays umfasst:
Bestätigen, ob das Display in Übereinstimmung mit dem bestimmten Sehkraftpegel automatisch anzupassen ist; und
Anpassen des entsprechenden Displays, falls bestätigt wird, dass das Display automatisch anzupassen ist.

15. Verfahren nach Anspruch 14,
weiter umfassend ein Gestatten dem Benutzer, manuell das Display anzupassen, falls bestätigt wird, dass das Display nicht automatisch anzupassen ist.

16. Verfahren nach Anspruch 11,
bei dem die Bilddaten in einem Zustand angezeigt werden, in dem ein vorgegebener Abstand zwischen dem mobilen Kommunikationsendgerät und dem Benutzer beibehalten wird.

17. Verfahren nach Anspruch 16,
wobei der vorgegebene Abstand 30 cm ist.

18. Verfahren nach Anspruch 11,
weiter umfassend ein Gestatten dem Benutzer, die angezeigten Bilddaten innerhalb einer vorgegebenen Zeit zu lesen.

19. Verfahren nach Anspruch 18,
bei dem die vorgegebene Zeit 3 Sekunden ist.

## Revendications

1. Appareil de réglage d'un affichage d'un terminal de communications mobile, l'appareil comprenant :
une unité de reconnaissance vocale (100) pour détecter des données vocales d'un utilisateur, dans lequel les données vocales de l'utilisateur correspondent à des données d'image affichées sur l'affichage ;
un contrôleur (110) pour déterminer un niveau de regard d'un utilisateur en comparant les données vocales détectées de l'utilisateur avec des données de référence prédéfinies correspondant aux données d'image affichées, et pour régler l'affichage sur la base du niveau de regard déterminé ; et
une unité de mémoire (130) pour stocker les données de référence prédéfinies,
dans lequel le contrôleur (110) affiche des données d'image correspondant à une valeur de regard diminuée d'une certaine valeur lorsque les données vocales détectées de l'utilisateur ne sont pas identiques aux données de référence prédéfinies.

2. Appareil selon la revendication 1,
dans lequel les données de référence prédéfinies comprennent au moins l'une de :
valeurs de regard ;
valeurs de taille de police correspondant aux valeurs de regard ;
données d'image prédéfinies en fonction des valeurs de taille de police ; et
données audio correspondant aux données d'image.

3. Appareil selon la revendication 2,
dans lequel au moins plus d'une donnée d'image prédéfinie existe pour chaque valeur de regard.

4. Appareil selon la revendication 1,
dans lequel les données d'image sont affichées dans un état où une distance prédéfinie entre le terminal de communications mobile et l'utilisateur est maintenue.

5. Appareil selon la revendication 4,
dans lequel la distance prédéfinie est 30 cm.

6. Appareil selon la revendication 1,
dans lequel le contrôleur (110) permet à l'utilisateur de lire les données d'image affichées dans un délai prédéfini.

7. Appareil selon la revendication 6,
dans lequel le délai prédéfini est de 3 secondes.

8. Procédé de réglage d'un affichage d'un terminal de communications mobile, le procédé comprenant :
la détection (S233) de données vocales d'un utilisateur, dans lequel les données vocales de l'utilisateur correspondent à des données d'image affichées sur l'affichage ;
la détermination d'un niveau de regard d'un utilisateur en comparant les données vocales détectées de l'utilisateur avec des données de référence prédéfinies correspondant aux données d'image affichées ; et
le réglage (S260) de l'affichage sur la base du niveau de regard déterminé, dans lequel des données d'image correspondant à une valeur de regard diminuée d'une certaine valeur sont affichées lorsque les données vocales détectées de l'utilisateur ne sont pas identiques aux données de référence prédéfinies.

9. Procédé selon la revendication 8,
dans lequel les données de référence prédéfinies comprennent au moins l'une de :
valeurs de regard ;
valeurs de taille de police correspondant aux valeurs de regard ;
données d'image prédéfinies en fonction des valeurs de taille de police ; et
données audio correspondant aux données d'image.

10. Procédé selon la revendication 9,
dans lequel au moins plus d'une donnée d'image prédéfinie existe pour chaque valeur de regard.

11. Procédé selon la revendication 8,
dans lequel l'étape de détermination du niveau de regard de l'utilisateur comprend :
l'affichage (S231) de données d'image correspondant à une valeur de regard prédéfinie en fonction d'une demande de l'utilisateur de réglage de l'affichage ;
la détection (233) des données vocales de l'utilisateur pour les données d'image affichées ;
la comparaison (S235) des données vocales détectées de l'utilisateur avec des données audio prédéfinies ;
la détermination (237) du nombre de fois où les données vocales détectées de l'utilisateur sont identiques aux données audio prédéfinies ; et
la détermination (S239) d'une valeur de regard correspondant aux données vocales détectées de l'utilisateur lorsque le nombre de fois déterminé où les données vocales détectées de l'utilisateur sont identiques aux données audio prédéfinies est le même qu'un nombre prédéterminé.

12. Procédé selon la revendication 11,
dans lequel le nombre prédéterminé est au moins plus d'une fois.

13. Procédé selon la revendication 11,
comprenant en outre l'affichage d'une autre donnée d'image correspondant à la même valeur de regard lorsque le nombre de fois déterminé où les données vocales détectées de l'utilisateur sont identiques aux données audio prédéfinies n'est pas le même que le nombre prédéterminé.

14. Procédé selon la revendication 8,
dans lequel l'étape de réglage (S260) de l'affichage comprend :
la confirmation s'il faut régler automatiquement l'affichage en fonction du niveau de regard déterminé ; et
le réglage de l'affichage correspondant si l'affichage est confirmé devoir être réglé automatiquement.

15. Procédé selon la revendication 14,
comprenant en outre de permettre à l'utilisateur de régler manuellement l'affichage s'il est confirmé de ne pas régler automatiquement l'affichage.

16. Procédé selon la revendication 11,
dans lequel les données d'image sont affichées dans un état où une distance prédéfinie entre le terminal de communications mobile et l'utilisateur est maintenue.

17. Procédé selon la revendication 16,
dans lequel la distance prédéfinie est 30 cm.

18. Procédé selon la revendication 11,
comprenant en outre de permettre à l'utilisateur de lire les données d'image affichées dans un délai prédéfini.

19. Procédé selon la revendication 18,
dans lequel le délai prédéfini est de 3 secondes.
